# EUROPÄISCHE PATENTSCHRIFT

(11) **EP 2 522 636 B1**
(45) Veröffentlichungstag und Bekanntmachung des Hinweises auf die Patenterteilung: **12.04.2017**
(21) Anmeldenummer: 12165649.0
(22) Anmeldetag: 26.04.2012
(51) Int. Cl.: C03B 5/237, F27B 3/26, F23L 15/02, F28D 17/02, F28F 27/02

(54) **REGENERATIVKAMMER FÜR EINE GLASSCHMELZANLAGE**
REGENERATIVE CHAMBER FOR A GLASS MELT ASSEMBLY
CHAMBRE DE RÉGÉNÉRATEUR POUR UNE INSTALLATION DE VITRIFICATION

(30) Priorität: 10.05.2011 DE 102011075619
(43) Veröffentlichungstag der Anmeldung: 14.11.2012
(73) Patentinhaber: Beteiligungen Sorg GmbH & Co. KG, 97816 Lohr am Main (DE)
(72) Erfinder: Sorg, Alexander, 63739 Aschaffenburg (DE); Lindig, Matthias, 55218 Ingelheim (DE)
(74) Vertreter: Keil & Schaafhausen Patent- und Rechtsanwälte PartGmbB

(56) Entgegenhaltungen:
- DE-A1- 19 543 743
- GB-A- 510 056
- GB-A- 711 554
- US-A- 1 836 412
- US-A- 4 088 180
- US-A- 4 256 173
- US-A- 4 257 476
- US-A- 4 540 361
- DATABASE WPI Week 198446 Thomson Scientific, London, GB; AN 1984-286797 XP002693645, -& SU 1 020 709 A1 (FERROUS METALLURGY INST) 30. Mai 1983 (1983-05-30)

## Beschreibung

Die Erfindung betrifft eine Regenerativkammer für eine Glasschmelzanlage nach dem Oberbegriff des Patentanspruchs 1.

In der Schmelztechnologie spielt eine regenerative Beheizung der Schmelzanlagen eine große Rolle. Dazu weisen Glasschmelzanlagen beispielsweise zwei Regenerativkammern auf. In jeder dieser Regenerativkammern ist eine Gitterung vorgesehen, mit der Wärme gespeichert werden kann. Dadurch kann mittels dieser ersten Regenerativkammer Verbrennungsluft auf bis zu 1300° C vorgewärmt werden. Die Verbrennungsluft wird meistens oberhalb von Eindüsstellen für fossilen Brennstoff in die Schmelzanlage eingebracht. Dort befindet sich somit die Feuerseite der Schmelzanlage. An dieser Feuerseite kommt es zur Vermischung des Brennstoffs mit dem in der Verbrennungsluft befindlichen Sauerstoff. Durch die exotherme Reaktion des in der Verbrennungsluft enthaltenen Sauerstoffs mit dem Brennstoff werden die in der Schmelzanlage befindlichen Rohstoffe (Schmelzgut) geschmolzen. Die beim Schmelzen der Rohstoffe entstandenen Abgase verlassen die Schmelzanlage mit etwa 1500° C und werden über die zweite Regenerativkammer abgeführt, wobei die die Regenerativkammer verlassenden Abgase immer noch eine Temperatur von etwa 500° C aufweisen. Nach einer bestimmten Zeit wird die Feuerseite gewechselt, so dass nun die Verbrennungsluft durch die zweite Regenerativkammer geführt wird, d. h. die Verbrennungsluft wird durch die Regenerativkammer geführt, durch die bisher die Abgase geführt wurden.

Der Wirkungsgrad der Vorwärmung der Kammer und damit auch die Wärmeübertragung auf die Verbrennungsluft hängen entscheidend davon ab, wie gleichmäßig der Querschnitt der Regenerativkammer von der Verbrennungsluft durchströmt wird. Gerade bei großen Schmelzanlagen ist eine gleichmäßige Durchströmung über den gesamten Querschnitt der Kammer nicht mehr gewährleistet. So wird häufig nur ein Abschnitt der Regenerativkammern - meist nur der der Schmelzanlage abgewandte Abschnitt der Regenerativkammern - mit den Abgasen bzw. der Verbrennungsluft durchströmt. Dadurch wird die Wärme der Abgase nur sehr ungleichmäßig auf die in der Regenerativkammer angeordnete Gitterung übertragen.

In der DE19543743 A1 ist daher bereits vorgeschlagen worden, bei der Glasherstellung in seitenbeheizten Regenerativwannen, die mehrere Brennerports mit Brennern und zugehörigen Regenerativwärmetauschern aufweisen, die aus jeweils einer Kammer mit einer Kammervergitterung bestehen, zur Steuerung von Menge und Vorwärmung die dem jeweiligen Brennerport zugeführte Verbrennungsluftmenge durch Gegenluftströmungen zu beeinflussen. Zur Vermeidung von Wirkungsgradverlusten durch Ablagerungen in den Wärmetauschern und zur Verringerung der NOₓ-Bildung werden der aufströmenden Verbrennungsluft mittels unterhalb der Kammergitterung angeordneter, nach unten gerichteter Düsen Gegenluftströmungen entgegengesetzt, wobei die Gegenluftströmungen für jeweils benachbarte Brennerports unabhängig voneinander nach Maßgabe des Luftbedarf des dem Brennerport zugeordneten Brenners eingestellt werden. Mit einer derartigen Vorrichtung lässt sich keine gleichmäßige Durchströmung der Vorwärmkammer in beiden Strömungsrichtungen erreichen. Durch die Ausbildung und Anordnung der Strömungskanäle wird vielmehr eine Matrix von Düsen gebildet, die aufgrund ihrer Versorgung mit Druckluft eine weitgehend gleichmäßig verteilte Gegenströmung zur Verbrennungsluft erzeugen, die durch Stellventile einstellbar ist. Es handelt sich also um eine Art Steuerluft oder Bremsluft für den Gesamtstrom, den man dadurch steuern will, dass man ihm eine Luftmenge entgegenbläst. Das geht aber nur in einer Richtung. In der anderen Richtung, d.h. in der Abgasphase wird der Abgasströmung mittels der gleichen Düsen Luft zur Nachverbrennung schädlicher Komponenten beigemischt, diesmal aber als Gleichstrom. In diesem Fall hat die Luft aus den Düsen keine bremsende Wirkung auf den Luftstrom, der jetzt in Gegenrichtung von oben nach unten durch die Regenerativkammer strömt.

Um die Strömungsgeschwindigkeit von Abgasen und Verbrennungsluft in Regenerativkammern zu beeinflussen, werden in der US4088180 A zwei unterschiedliche Strömungswiderstände beschrieben. Das eine Element dient zur Steuerung der Luft auf mehrere Regenerativkammerabschnitte. Die Abschnitte können dabei jeweils einer Brennergruppe zugeordnet werden. Die zweite Strömungsbarriere dient zur vertikalen Unterteilung (Trennung) innerhalb einer Regenerativkammer, um die Anströmung der einzelnen Brenner einer querbeheizten Schmelzanlage zu verbessern. Mit der Strömungsbarriere wird das Abgas zwischen den Regenerativkammern geteilt.
Aufgabe der vorliegenden Erfindung ist es daher, eine Regenerativkammer für eine Schmelzanlage bereitzustellen, die von Abgasen bzw. Verbrennungsluft gleichmäßig durchströmt wird.

Die Aufgabe der vorliegenden Erfindung wird durch die Merkmale des Patentanspruchs 1 gelöst.

Die Erfindung betrifft somit eine Regenerativkammer für eine Glasschmelzanlage mit einem definierten Querschnitt. Die Regenerativkammer weist mehrere Schlitzbogen auf, auf denen Übergangslagen angeordnet sind, wobei oberhalb der Übergangslagen eine Gitterung angebracht ist. Dabei ist eine bewegbare Strömungsbarriere von außen in die Regenerativkammer eingebracht. Mit dieser Strömungsbarriere kann der Querschnitt der Regenerativkammer verringert werden. Die Strömungsbarriere besteht aus mehreren Segmenten, wobei die Segmente in sich Unterbrechungen aufweisen können. Bei diesen Segmenten kann es sich beispielsweise um Plattenelemente oder Stabelemente handeln, die unterhalb, innerhalb oder oberhalb der in der Regenerativkammer vorgesehenen Übergangslagen angeordnet werden können.

Ausführungsbeispiele der Erfindung sind in den Figuren dargestellt und werden im Folgenden näher beschrieben. Es zeigen:
- Figur 1: eine perspektivische Ansicht einer Glasschmelzanlage mit zwei Regenerativkammern;
- Figur 2: einen Schnitt A-A durch die in Figur 1 dargestellte Glasschmelzanlage mit den beiden Regenerativkammern;
- Figur 3: einen Schnitt B-B durch die in Figur 1 dargestellte Glasschmelzanlage;
- Figur 4: einen Schnitt C-C durch die in Figur 1 dargestellte Glasschmelzanlage;
- Figur 5: einen vergrößerten Ausschnitt der in Figur 3 gezeigten Regenerativkammer;
- Figur 6: einen Schnitt D-D durch die in Figur 5 dargestellte Regenerativkammer;
- Figur 7: einen Schnitt E-E durch die in Figur 5 dargestellte Regenerativkammer;
- Figur 8: einen vergrößerten Ausschnitt der in Figur 3 dargestellten Regenerativkammer mit einer Variante einer Strömungsbarriere;
- Figur 8a: einen vergrößerten Ausschnitt des in Figur 8 dargestellten Abschnitts der Regenerativkammer;
- Figur 9: einen Schnitt D-D durch die in Figur 8 dargestellte Regenerativkammer;
- Figur 10: einen Schnitt E-E durch die in Figur 8 dargestellte Regenerativkammer.

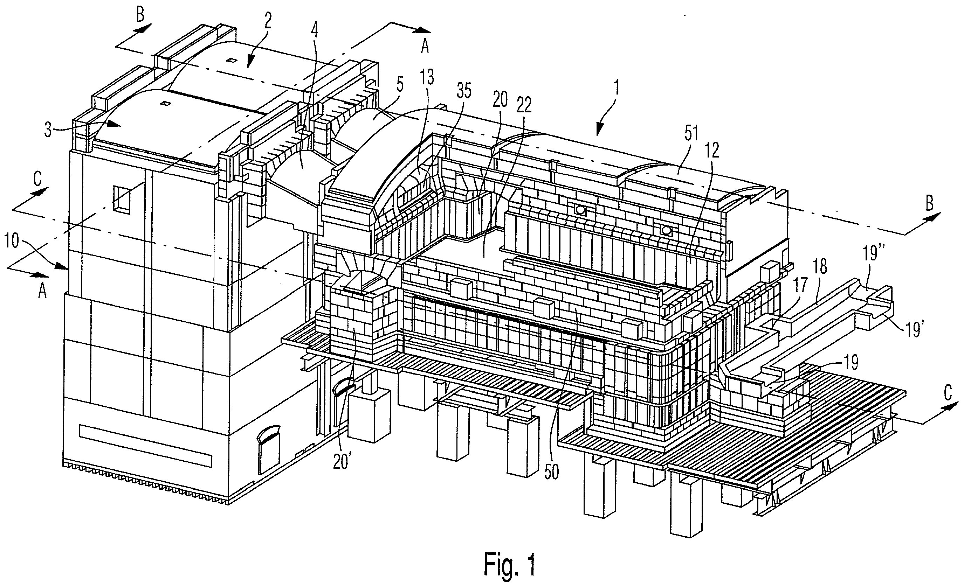

Figur 1 zeigt eine perspektivische Ansicht einer Glasschmelzanlage 1 mit zwei daran angeordneten Regenerativkammern 2, 3. Diese Regenerativkammern 2, 3 sind als Einzelkammern ausgebildet. Die Glasschmelzanlage 1 bildet zusammen mit den zwei daran angeordneten Regenerativkammern 2, 3 eine Anordnung 21. Die Regenerativkammern 2, 3 sind von einer feuerfesten Wand 10 umgeben und überdacht. Die Regenerativkammern 2, 3 sind über einen Brennerhals 4 bzw. 5 mit der Glasschmelzanlage 1 verbunden. Dadurch, dass ein Teil einer Wand 50 sowie ein Teil eines Dachs 51 der Glasschmelzanlage 1 nicht dargestellt sind, ist im Inneren der Glasschmelzanlage 1 ein Schmelzraum 12 zu sehen. In diesem Schmelzraum 12 wird Schmelzgut, das über zwei gegenüberliegende Einlegevorbauten 20, 20' eingebracht wird, geschmolzen. Die dabei entstehende Schmelze trägt die Bezugszahl 22.

Gegenüber den beiden Brennerhälsen 4, 5 ist ein Durchlass 17 vorgesehen, der den Schmelzraum 12 mit einem Verteiler 18 verbindet. Dieser Verteiler 18 weist mehrere Federanschlüsse 19, 19', 19" auf. Über den Durchlass 17 kann die Schmelze 22 den Schmelzraum 12 verlassen und zu dem Verteiler 18 gelangen. Von dem Verteiler 18 gelangt die Schmelze 22 zu dem entsprechenden Federanschluss 19, 19', 19", der mit einer Verarbeitungsstation verbunden ist. Eine Verarbeitungsstation ist jedoch in Figur 1 nicht dargestellt. Der Durchlass 17, der Verteiler 18 sowie die Federanschlüsse 19, 19', 19" sind ohne Überdachung dargestellt.

Der Brennerhals 4 und der Brennerhals 5 weisen jeweils eine Öffnung auf, über die ein Gasaustausch zwischen der entsprechenden Regenerativkammer 2 bzw. 3 und dem Schmelzraum 12 stattfinden kann. In Figur 1 ist dabei nur die Öffnung 13 des Brennerhalses 5 zu sehen. Unterhalb dieser Öffnung 13 ist eine Eindüsstelle 35 für einen fossilen Brennstoff vorgesehen, über die der fossile Brennstoff in den Schmelzraum 12 eingebracht werden kann.

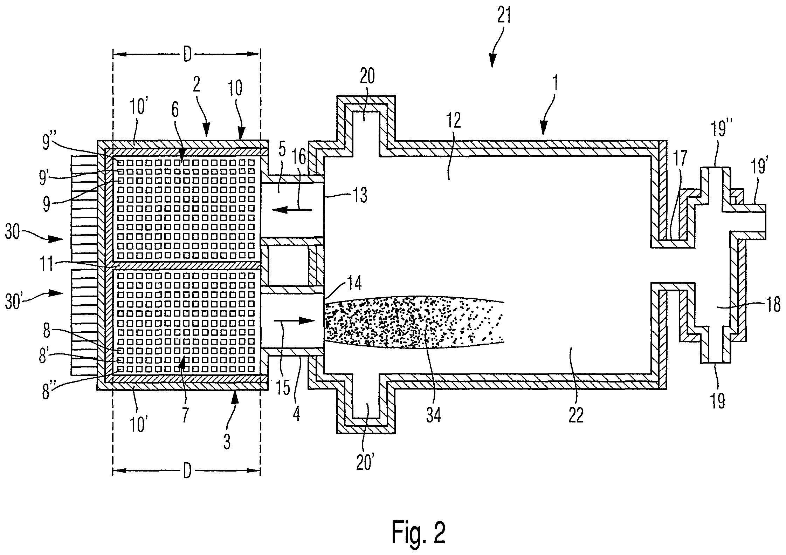

Figur 2 zeigt einen Schnitt A-A durch die in Figur 1 dargestellte Glasschmelzanlage 1 mit den beiden als Einzelkammern ausgebildeten Regenerativkammern 2, 3, wobei die Glasschmelzanlage 1 sowie die beiden Regenerativkammern 2, 3 nur schematisch dargestellt sind. Die Glasschmelzanlage 1 ist jeweils über den Brennerhals 4 bzw. 5 mit der entsprechenden Regenerativkammer 2, 3 verbunden.

In jeder Regenerativkammer 2, 3 ist eine Gitterung 6, 7, als Wärmespeicher der Regenerativkammern 2, 3, vorgesehen. Diese Gitterung 6, 7 umfasst mehrere übereinander angeordnete Lagen aus Gittersteinen. Jede Lage besteht wiederum aus mehreren nebeneinander angeordneten Gittersteinen 8, 8', 8" bzw. 9, 9',9". Bei diesen Gittersteinen kann es sich beispielsweise um Topfsteine handeln.

Die beiden Regenerativkammern 2, 3 weisen mehrere Wandabschnitte 10' auf und sind durch eine Trennwand 11 voneinander getrennt. Die Trennwand 11 ist dabei ebenfalls ein Bestandteil der Wand 10. Beide Regenerativkammern 2, 3 weisen einen definierten Querschnitt D auf, der durch die Abstände der Wandabschnitte 10' bzw. der Trennwand 11 der Wand 10 zueinander definiert wird.

In jeder der Regenerativkammern 2, 3 sind Strömungsbarrieren 30, 30' vorgesehen, die von außen in den unteren Bereich der entsprechenden Regenerativkammern 2, 3 eingebracht sind. Dazu weist jede der Regenerativkammern 2, 3 Öffnungen in der Wand 10 auf, durch die die Strömungsbarrieren 30, 30' in die entsprechende Regenerativkammer 2, 3 eingebracht werden können. Die Öffnungen in der Wand 10 sind jedoch in Figur 2 nicht zu sehen, da diese Öffnungen unterhalb der Gitterung 6, 7 der entsprechenden Regenerativkammer 2, 3 angeordnet sind. Jede Strömungsbarriere 30, 30' besteht aus mehreren Segmenten, wobei die einzelnen Segmente in Figur 2 der Übersicht halber nicht mit Bezugszeichen versehen sind.

Gegenüber den beiden Brennerhälsen 4, 5 ist der Durchlass 17 zu erkennen, der den Schmelzraum 12 mit dem Verteiler 18 verbindet. Dieser Verteiler 18 weist mehrere Federanschlüsse 19, 19', 19" auf. Zu erkennen sind auch die zwei gegenüberliegenden Einlegevorbauten 20, 20', über die die zu schmelzenden Rohstoffe eingebracht werden können.

Der Brennerhals 4 weist zu dem Schmelzraum 12 hin die Öffnung 14 auf, durch die die aus der Regenerativkammer 3 kommende, vorgewärmte, Sauerstoff enthaltende Verbrennungsluft in den Schmelzraum 12 der Schmelzanlage 1 eingebracht wird, was durch den Pfeil 15 angedeutet ist. Die Verbrennungsluft, die auf bis zu 1300° C vorgewärmt ist, wird mit einem fossilen Brennstoff vermischt. Dieser fossile Brennstoff wird unterhalb der Öffnung 14 des Brennerhalses 4 über eine in Figur 2 nicht zu sehende Eindüsstelle in den Schmelzraum 12 eingebracht, wobei sich der Brennstoff entzündet. Die dabei entstehende Flamme trägt die Bezugszahl 34. Die Feuerseite befindet sich somit in dem Abschnitt der Schmelzanlage 1, in dem der Brennerhals 4 angeordnet ist.

Die bei dieser exothermen Reaktion entstehende Energie schmilzt das über die Einlegevorbauten 20, 20' in den Schmelzraum 12 eingebrachte Schmelzgut. Die Schmelze 22 wandert dann in Richtung des Durchlasses 17. Nach Verlassen des Durchlasses 17 erreicht die Schmelze 22 den Verteiler 18. Dort kann die Schmelze den Verteiler 18 über den entsprechenden Federanschluss 19, 19', 19" verlassen und zu einer Verarbeitungsstation gelangen. Eine Verarbeitungsstation ist in Figur 2 jedoch nicht dargestellt.

Die bei dem Schmelzen des Schmelzguts entstehenden Abgase werden über eine Öffnung 13 des Brennerhalses 5 aus dem Schmelzraum 12 geführt und über die Regenerativkammer 2 aus der Anordnung 21 abgeführt, was durch den Pfeil 16 angedeutet ist. Die beim Schmelzen der Rohstoffe, d.h. des Schmelzguts, entstandenen Abgase, verlassen die Glasschmelzanlage mit etwa 1500°C. Nach Passieren der Gitterung 6 der Regenerativkammer 2 besitzen die Abgase eine Temperatur von nur noch etwa 500° C.

Nach einer bestimmten Zeit, beispielsweise nach 20 Minuten, wird die Feuerseite gewechselt, so dass nun die Abgase durch die Öffnung 14 des Brennerhalses 4 aus der Glasschmelzanlage 1 abgeführt werden und die Verbrennungsluft durch die Öffnung 13 des Brennerhalses 5 in den Schmelzraum 12 der Glasschmelzanlage 1 eingebracht wird.

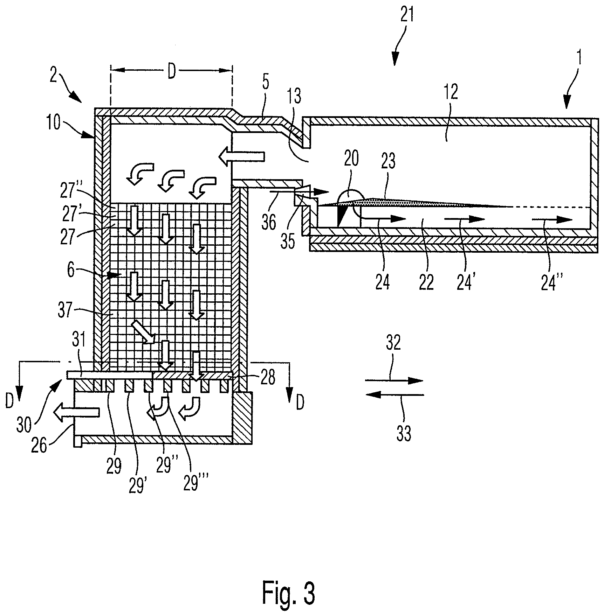

In Figur 3 ist ein Schnitt B-B durch die in Figur 1 dargestellte Glasschmelzanlage 1 mit der Regenerativkammer 2, die über den Brennerhals 5 mit der Glasschmelzanlage 1 verbunden ist, schematisch gezeigt. Diese Regenerativkammer 2 weist den Querschnitt D auf. Im unteren Bereich des Schmelzraums 12 der Glasschmelzanlage 1 ist die Schmelze 22 zu sehen, auf der zumindest teilweise das noch nicht geschmolzene Schmelzgut 23 angeordnet ist. Die Glasschmelze 22 strömt dabei von den Einlegevorbauten 20, 20', über die das Schmelzgut 23 in den Schmelzraum 12 eingebracht wird, in Richtung des Durchlasses 17 und danach weiter in den Verteiler 18. Dies ist durch die Strömungspfeile 24,24' und 24" angedeutet. Der Durchlass 17 sowie der Verteiler 18 sind aufgrund des durch die Anordnung 21 geführten Schnitts nicht zu sehen.

Die Abgase werden über die Öffnung 13 aus dem Schmelzraum 12 entfernt. Die bis zu 1500° heißen Abgase werden dann in der Regenerativkammer 2 durch die Gitterung 6 geführt, wobei die Gitterung 6 Energie speichert, so dass die Abgase die Regenerativkammer 2 über einen Austritt 26 mit einer Temperatur von nur noch bis zu 500° C verlassen. Die Gitterung 6 besteht aus mehreren übereinander angeordneten Lagen aus Gittersteinen, wobei nur die Lagen 27, 27' und 27" mit Bezugszeichen versehen sind. Die Gitterung 6 ruht auf Übergangslagen 28, die wiederum oberhalb mehrerer nebeneinander angeordneten Schlitzbogen 29, 29', 29", 29"' angebracht sind.

Unterhalb der Öffnung 13 des Brennerhalses 5 ist die Eindüsstelle 35 für einen fossilen Brennstoff vorgesehen, durch die der fossile Brennstoffe in den Schmelzraum 12 eingebracht werden kann, was durch den Pfeil 36 angedeutet ist. Da sich jedoch die Feuerseite nicht in diesem Bereich der in Glasschmelzanlage 1 befindet, wird über die Eindüsstelle 35 kein fossiler Brennstoff in den Schmelzraum 12 der Glasschmelzanlage 1 geführt. Die Eindüsstelle 35 ist damit geschlossen, was beispielsweise durch Ventile möglich ist, die jedoch in Figur 3 nicht gezeigt sind.

Oberhalb der Schlitzbögen ist die Strömungsbarriere 30 angeordnet. Durch diese Strömungsbarriere 30 wird der Querschnitt D der Regenerativkammer 2 verkleinert. Diese Strömungsbarriere 30 kann aus mehreren nebeneinander angeordneten Segmenten wie z.B. Plattenelementen oder Stabelementen bestehen, wobei in Figur 3 nur das Segment 31 zu erkennen ist. Die Segmente 31 sind dabei durch die Wand 10 der Regenerativkammer 2 durchgeführt und können in Richtung der Pfeile 32 bzw. 33 bewegt werden. Die Segmente 31 können somit in die Regenerativkammer 2 hinein oder aus dieser heraus bewegt werden. Durch Bewegen der Strömungsbarrieren 30 in die Regenerativkammer 2 hinein oder aus der Regenerativkammer 2 heraus kann der Querschnitt der Regenerativkammer 2 im Bereich der Übergangslagen 28 verändert werden, womit ein optimales Strömungsverhalten der Abgase erhalten wird. Wird die Strömungsbarriere 30 noch weiter in die Regenerativkammer 2 hinein geschoben, so wird der Querschnitt weiter verkleinert, wohingegen dieser verkleinerte Querschnitt wieder vergrößert werden kann, wenn die Strömungsbarriere 30 wieder etwas aus der Regenerativkammer 2 herausgezogen wird. Die Strömungsbarriere 30 kann dabei mittels eines Motors oder per Hand bewegt werden. Die Strömungsbarriere 30 kann aus einem beliebigen temperaturbeständigen Material bestehen, das den an der Stelle herrschenden Temperaturschwankungen und den hohen Temperaturen standhält. So können diese Strömungsbarrieren 30 beispielsweise aus einem Metall, einer Metalllegierung oder aus keramischen Materialien bestehen. Obwohl in Figur 3 nicht dargestellt, so können die einzelnen Segmente der Strömungsbarriere 30 in sich Unterbrechungen, z.B. in Form von Löchern und/oder Schlitzen, aufweisen. Ferner ist es möglich, dass die einzelnen Segmente aus mehreren miteinander verbundenen Einzelsegmenten bestehen, was jedoch in Figur 3 ebenfalls nicht dargestellt ist. Auch diese Einzelsegmente können Unterbrechungen in Form von Schlitzen und/oder Löchern aufweisen und können beispielsweise als Platten oder Stäbe vorliegen.

Durch diese Unterbrechungen kann eine bestimmte Menge an Abgasen durch die Strömungsbarriere gelangen.

Das Strömungsprofil der Abgase innerhalb der Regenerativkammer 2 ist durch mehrere Pfeile angedeutet. Zu erkennen ist, dass im Bereich der Strömungsbarriere 30 keine bzw. kaum Abgase durch die Übergangslagen sowie die Schlitzbögen gelangen können, so dass die Abgase im Bereich der Strömungsbarriere 30 in das Zentrum der Regenerativkammer 2 geleitet werden. Da der Anteil an Abgasen in einem der Glasschmelzanlage 1 abgewandten Abschnitt 37 der Regenerativkammer 2 ohne eine solche Strömungsbarriere 30 sehr hoch wäre, wird durch die Strömungsbarriere 30 dieser Anteil an Abgasen in das Zentrum der Regenerativkammer 2 bewegt. Dadurch werden die Abgase gleichmäßig in der Regenerativkammer 2 verteilt, womit auch die Energie der Abgase gleichmäßig auf die Gitterung 6 verteilt wird.

Die Strömungsbarriere 30 dient damit zur Vergleichmäßigung der Abgase innerhalb der Regenerativkammer 2 und damit zu einer gleichmäßigen Verteilung der Energie auf die Gitterung 6.

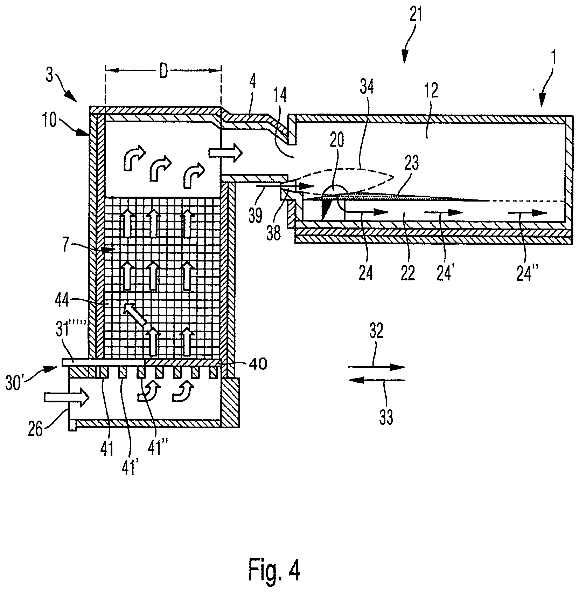

Figur 4 zeigt einen Schnitt C-C durch die in Figur 1 dargestellte Glasschmelzanlage 1 mit der Regenerativkammer 3, die über den Brennerhals 4 mit dem Schmelzraum 12 der Glasschmelzanlage 1 verbunden ist. Die Glasschmelzanlage 1 mit der daran angeordneten Regenerativkammer 3 ist nur schematisch dargestellt. Der Brennerhals 4 weist die Öffnung 14 auf, über die die Verbrennungsluft in den Schmelzraum 12 geführt wird. Unterhalb der Öffnung 14 ist eine Eindüsstelle 38 vorgesehen, durch die der fossile Brennstoff in den Schmelzraum 12 gelangt, was durch den Pfeil 39 angedeutet ist. Der fossile Brennstoff wird mit der Verbrennungsluft vermischt und reagiert mit dem Sauerstoff der Verbrennungsluft, so dass die Flamme 34 entsteht, die sich oberhalb des Schmelzguts 23 befindet. Die Feuerseite liegt somit in dem Bereich des Brennerhalses 4, so dass in diesem Bereich auch das Schmelzgut geschmolzen wird. Die Schmelze 22 wandert in Richtung des Verteilers 18, was durch die Pfeile 24, 24', 24" gezeigt ist. Der Verteiler 18 ist jedoch bei der in Figur 4 gezeigten Darstellung nicht zu sehen.

In der Regenerativkammer 3 befindet sich die Gitterung 7, die wiederum aus mehreren Lagen aus Gittersteinen besteht. Die Gitterung 7 ist wiederum auf Übergangslagen 40 angeordnet, die oberhalb mehrerer nebeneinander angeordneter Schlitzbogen 41,41', 41" sitzen. Bei diesen Gittersteinen kann es sich beispielsweise um Topfsteine handeln.

Oberhalb der Schlitzbogen 41, 41', 41" ist die Strömungsbarriere 30' angeordnet. Diese Strömungsbarriere 30' besteht - wie auch die Strömungsbarriere 30 in der Regenerativkammer 2 - aus mehreren nebeneinander angeordneten Segmenten. In Figur 4 ist jedoch nur das Segment 31""' zu sehen. Das Segment 31""' ist dabei ebenfalls durch die Wand 10 der Regenerativkammer 3 durchgeführt und kann in Richtung der Pfeile 32 bzw. 33 bewegt werden. Die Strömungsbarriere 30' kann somit ebenfalls in die Regenerativkammer 3 hinein oder aus dieser heraus bewegt werden.

Durch die Bewegung der einzelnen Segmente 31""' in Richtung der Pfeile 32 bzw. 33 kann der Querschnitt der Regenerativkammer 2 im Bereich der Übergangslagen 40 derart eingestellt werden, dass ein optimales Strömungsverhalten der Verbrennungsluft erhalten wird. Die Strömungsbarriere 30' kann aus einem beliebigen temperaturbeständigen Material bestehen, beispielsweise aus einem Metall, einer Metalllegierung oder aus keramischen Materialien, das den an der Stelle herrschenden Temperaturschwankungen und den hohen Temperaturen standhält. Obwohl in Figur 4 nicht dargestellt, so können die einzelnen Segmente der Strömungsbarriere 30' in sich Unterbrechungen, z.B. Schlitze und/oder Löcher aufweisen.

Das Strömungsprofil der Verbrennungsluft innerhalb der Regenerativkammer 3 ist durch mehrere Pfeile angedeutet. Im Bereich der Strömungsbarriere 30' kann keine oder nur sehr wenig Verbrennungsluft durch die Übergangslagen 40 gelangen, so dass die Verbrennungsluft im Bereich der Strömungsbarriere 30' in das Zentrum der Regenerativkammer 3 geleitet wird. Dadurch wird verhindert, dass sich ein erhöhter Anteil an Verbrennungsluft in einem der Schmelzanlage 1 abgewandten Abschnitt 44 der Regenerativkammer 3 ansammelt. Aufgrund der Strömungsbarriere 30' wird die Verbrennungsluft in der Regenerativkammer 3 gleichmäßig verteilt und damit die von der Gitterung 7 gespeicherte Wärme gleichmäßig an die Verbrennungsluft abgegeben.

Die Strömungsbarriere 30' dient damit zur Vergleichmäßigung der Verbrennungsluft innerhalb der Regenerativkammer 3.

Für einen Fachmann ist klar, dass die Strömungsbarrieren 30, 30' in den entsprechenden Regenerativkammer 2, 3 auch oberhalb der Übergangslagen 28 bzw. 40 angebracht werden können. Bei dieser Variante ist die Strömungsbarriere somit zwischen den Übergangslagen und der Gitterung angeordnet. Eine solche Variante ist jedoch nicht dargestellt.

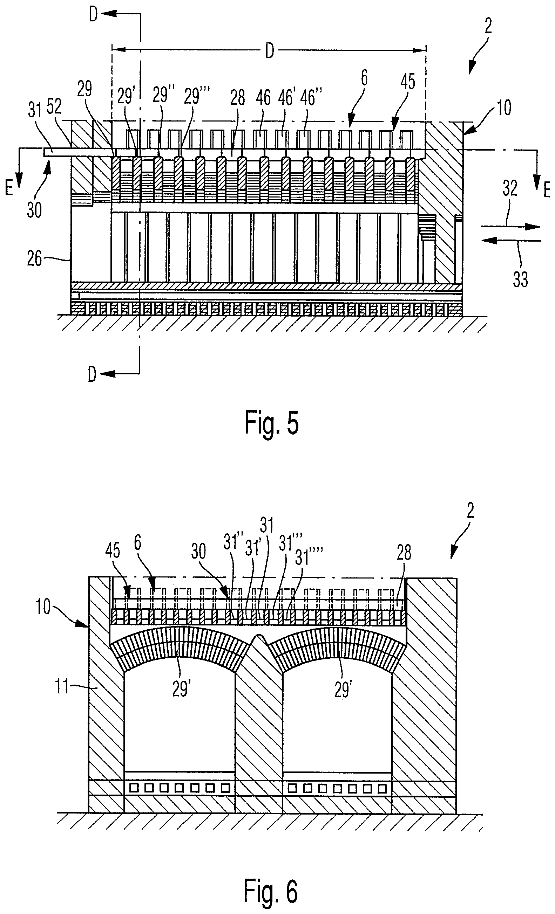

Figur 5 zeigt einen vergrößerten Ausschnitt der in Figur 3 gezeigten Regenerativkammer 2.

Die Regenerativkammer 2 weist in dem unteren Bereich die Schlitzbogen 29, 29', 29", 29'" auf, oberhalb denen die Übergangslagen 28 angeordnet sind. Auf den Übergangslagen 28 ist die Gitterung 6 angebracht, die mehrere übereinander angeordnete Lagen aus Gittersteinen aufweist, wobei in dieser Figur nur die erste Lage 45 mit den Gittersteinen 46, 46', 46" dargestellt ist. Oberhalb der Schlitzbögen 29, 29', 29", 29"' ist das Segment 31 der Strömungsbarriere 30 angebracht. In diesem Ausführungsbeispiel ist das Segment 31 plattenförmig ausgebildet, womit es sich bei diesem Segment 31 um ein Plattenelement handelt. Es versteht sich, dass die Segmente der Strömungsbarriere 30 auch eine andere Form aufweisen können. Beispielsweise können die einzelnen Segmente der Strömungsbarriere 30 auch stabförmig ausgebildet sein. Das Segment 31 ist durch eine in der Wand 10 vorgesehene Öffnung 52 in die Regenerativkammer 2 eingebracht.

Das Segment 31 kann entweder weiter in die Regenerativkammer 2 hinein oder aus dieser Regenerativkammer 2 wieder herausgezogen werden, womit der Querschnitt der Regenerativkammer 2 in diesem Bereich eingestellt werden kann, wodurch auch das Strömungsverhalten des in die Regenerativkammer 2 hineinströmenden oder herausströmenden Gases optimal eingestellt werden kann.

Es versteht sich, dass die Strömungsbarriere 30' der Regenerativkammer 3 entsprechend der Strömungsbarriere 30 aufgebaut ist. Da sich der Aufbau der Regenerativkammer 3 nicht von dem Aufbau der Regenerativkammer 2 unterscheidet, wird darauf verzichtet, die Regenerativkammer 3 mit der Strömungsbarriere 30' zu beschreiben.

In Figur 6 ist ein Schnitt D-D durch die in Figur 5 dargestellte Regenerativkammer 2 gezeigt. Bei dieser Ansieht ist die erste Lage 45 der Gitterung 6 zu sehen. Benachbart zu dem Segment 31 sind weitere Segmente 31', 31",31'",31"" vorgesehen, die zusammen die Strömungsbarriere 30 bilden. Die einzelnen Segmente 31, 31', 31", 31'", 31"" der Strömungsbarriere 30 können unabhängig voneinander in die Regenerativkammer 2 hinein oder aus dieser hinaus bewegt werden. Die einzelnen Segmente 31, 31', 31", 31'", 31"" der Strömungsbarriere 30 sind dabei innerhalb der Übergangslagen 28 angeordnet und liegen oberhalb des Schlitzbogens 29'.

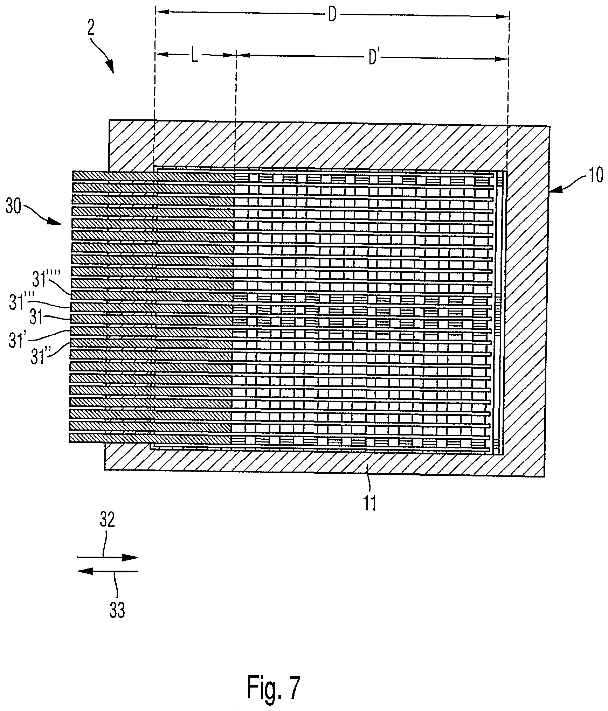

In Figur 7 ist ein Schnitt E-E durch die in Figur 5 dargestellte Regenerativkammer 2 gezeigt. Die Gitterung 6 ist bei dieser Darstellung nicht zu sehen. Die Strömungsbarriere 30 mit den einzelnen nebeneinander angeordneten Segmenten 31, 31', 31", 31"', 31"" sind durch in der Wand 10 angeordneten Öffnungen in die Regenerativkammer 2 eingebracht. Die einzelnen Segmente 31, 31', 31", 31"', 31"" der Strömungsbarriere 30 können unabhängig voneinander in die Regenerativkammer 2 hinein oder aus dieser hinaus bewegt werden, was durch die Pfeile 32 und 33 angedeutet ist. In Figur 7 sind die einzelnen Segmente 31, 31', 31", 31"', 31"" jedoch alle gleich tief in das Innere der Regenerativkammer 2 eingebracht worden, wodurch der Querschnitt D der Regenerativkammer 2 verringert worden ist. In diesem Bereich weist die Regenerativkammer 2 somit nur noch einen Querschnitt D' auf. Dieser verkleinerte Querschnitt D' ergibt sich aus D (Querschnitt der Regenerativkammer 2) - L (Lange der Abschnitte der Strömungsbarriere 30, die in die Regenerativkammer 2 eingebracht sind).

Es ist auch möglich, dass ein Teil der Segmente weggelassen wird. So kann beispielsweise jedes zweite oder dritte Segment der Strömungsbarriere 30 entfernt werden. Damit entsteht eine Strömungsbarriere 30 mit Lücken, durch die Abgase gelangen können.

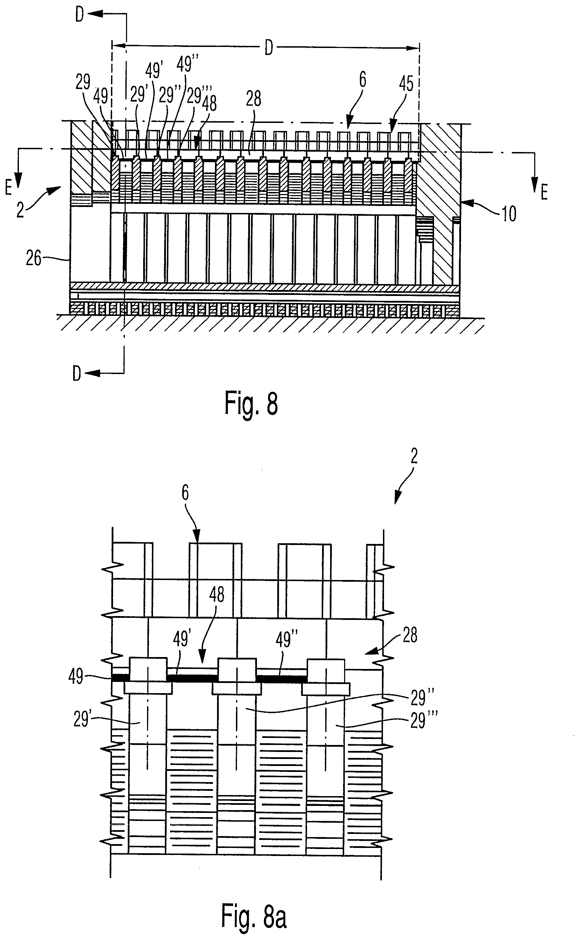

Figur 8 zeigt einen vergrößerten Ausschnitt der in Figur 3 dargestellten Regenerativkammer 2 mit einer Variante einer Strömungsbarriere 48. In der Wand 10 der Regenerativkammer 2 ist auch der Austritt 26 angeordnet, aus dem die Abgase entweichen können oder aber die Verbrennungsluft in die Regenerativkammer 2 eintreten kann. Die Strömungsbarriere 48 besteht aus drei nebeneinander angeordneten Segmenten 49, 49',49", die jeweils auf zwei benachbarten Schlitzbögen 29, 29' bzw. 29', 29" bzw. 29", 29'" zumindest teilweise aufliegen. Jedes dieser Segmente 49, 49', 49" kann in die Bildebene hinein oder aus dieser heraus bewegt werden. Im Gegensatz zu der Strömungsbarriere 30 ist die Strömungsbarriere 48 somit nicht innerhalb der Übergangslagen 28, sondern unterhalb der Übergangslagen 28 angeordnet, wobei die Strömungsbarriere 48 zumindest teilweise auf den Schlitzbögen 29, 29', 29", 29'" angeordnet ist. Oberhalb der Übergangslagen 28 ist die Gitterung 6 angeordnet, wobei nur die erste Lage 45 der Gitterung 6 gezeigt ist.

Soll nun der Querschnitt D der Regenerativkammer 2 verringert werden, so kann dies dadurch geschehen, dass die Strömungsbarriere 48 durch ein oder mehrere zusätzliche Segmente erweitert wird. Durch Entfernen der drei Segmente 49, 49", 49" kann somit ein Querschnitt erhalten werden, der dem Querschnitt D der Regenerativkammer 2 entspricht.

Auch diese Segmente 49, 49', 49" können aus einer Metalllegierung, einem Metall oder aus keramischen Materialien bestehen. Wie auch die Segmente 31, 31', 31", 31"', 31"" der Strömungsbarriere 30 sind die Segmente 49, 49', 49" plattenförmig ausgebildet, jedoch können die einzelnen Segmente 49, 49', 49" beispielsweise auch stabförmig ausgebildet sein. Die Segmente 49, 49', 49" können dabei in sich Unterbrechungen in Form von Löchern und/oder Schlitzen aufweisen. Durch diese Löcher und/oder Schlitze kann Gas durch die Strömungsbarriere 48 gelangen.

Die Segmente der Strömungsbarriere 48 können ebenfalls einteilig oder aus mehreren Einzelsegmenten bestehen, die miteinander zu einem Segment verbunden sind. Diese Einzelsegmente können dabei aus einer Metalllegierung, einem Metall oder aus keramischen Materialien bestehen und Unterbrechungen aufweisen. Die Unterbrechungen der Einzelsegmente können ebenfalls Löcher und/oder Schlitze sein.
In Figur 8a ist ein vergrößerter Ausschnitt des in Figur 8 dargestellten Abschnitts der Regenerativkammer 2 dargestellt. Deutlich zu erkennen ist, wie die Strömungsbarriere 48 zumindest teilweise auf den Schlitzbögen 29', 29", 29'" aufliegt. So liegt das Segment 49' teilweise auf dem Schlitzbogen 29' und teilweise auf dem Schlitzbogen 29" und das Segment 49" teilweise auf dem Schlitzbogen 29" und teilweise auf dem Schlitzbogen 29"'. Oberhalb der Schlitzbögen 29', 29", 29"' sind die Übergangslagen 28 angeordnet.

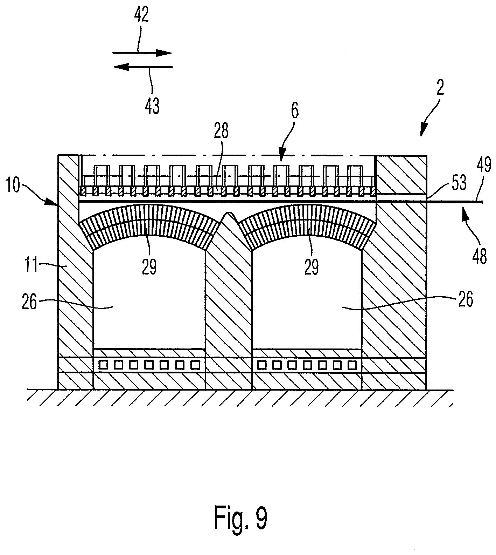

In Figur 9 ist ein Schnitt D-D durch die in Figur 8 dargestellte Regenerativkammer 2 gezeigt. Das Segment 49 der Strömungsbarriere 48 ist durch eine Öffnung 53 in der Wand 10 in die Regenerativkammer 2 eingebracht, wobei sich die Öffnung 53 gegenüber der Trennwand 11 befindet. Das Segment 49 der Strömungsbarriere 48 ruht dabei zumindest teilweise auf dem Schlitzbogen 29, womit die Strömungsbarriere 48 unterhalb der Übergangslagen 28 und damit auch unterhalb der Gitterung 6 angeordnet ist. Das Segment 49 der Strömungsbarriere 48 kann in Richtung der Pfeile 42 bzw. 43 bewegt werden. Wird das Segment 49 in Richtung des Pfeils 42 bewegt, kann das Segment 49 aus der Regenerativkammer 2 heraus bewegt werden.

Die Regenerativkammer 2 kann damit Öffnungen zum Einführen einer Strömungsbarriere aufweisen, die gegenüber dem Schmelzraum 12 der Glasschmelzanlage 1 und/oder gegenüber der Trennwand 11 liegen. Weist die Regenerativkammer Öffnungen auf, die zum einen gegenüber dem Schmelzraum 12 und zum anderen gegenüber der Trennwand 11 liegen, so kann der Querschnitt D der Regenerativkammer 2 wahlweise durch die Strömungsbarriere 30 oder die Strömungsbarriere 48 verringert werden.

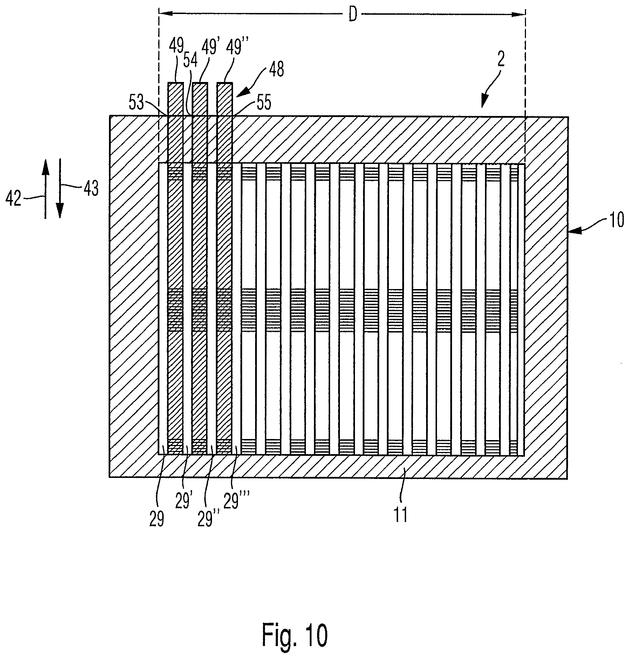

In Figur 10 ist wiederum ein Schnitt E-E durch die in Figur 8 dargestellte Regenerativkammer 2 gezeigt. In dieser Regenerativkammer 2 liegen die drei nebeneinander angeordneten Segmenten 49, 49' und 49" auf den Schlitzbögen 29, 29', 29" bzw. 29'" zumindest teilweise auf. Die Segmente 49, 49' und 49" der Strömungsbarriere 48 sind über Öffnungen 53, 54, 55 in der Wand 10 in die Regenerativkammer 2 eingebracht. Die Öffnungen 53, 54, 55 liegen gegenüber der Trennwand 11. Die einzelnen Segmente 49, 49' und 49" können dabei aus der Regenerativkammer 2 heraus oder in die Regenerativkammer 2 hinein bewegt werden, was durch die Pfeile 42 und 43 angedeutet ist. Durch Hinzufügen weiterer Segmente kann der Querschnitt D der Regenerativkammer 2 weiter verkleinert werden, was in Figur 10 jedoch nicht dargestellt ist. Wird eines der Segmente 49, 49' und 49" entfernt, so wird der Querschnitt der Regenerativkammer 2 im Bereich der Schlitzbogen 29, 29', 29", 29"' wieder vergrößert.

Möglich ist auch beispielsweise, das erste oder zweite Segment 49, 49' zu entfernen, so dass eine Strömungsbarriere 48 erhalten wird, die eine Lücke aufweist.

Es versteht sich, dass auch in die Regenerativkammer 3 eine Strömungsbarriere eingebracht werden kann, die der Strömungsbarriere 48 entspricht. Da sich jedoch der Aufbau der Regenerativkammer 3 nicht von dem Aufbau der Regenerativkammer 2 unterscheidet, wird darauf verzichtet, die Regenerativkammer 3 mit einer solchen Strömungsbarriere zu beschreiben.

Die als Einzelkammer ausgebildete Regenerativkammer 2 bzw. 3 kann auch als Doppelkammer ausgebildet sein. Bei dieser als Doppelkammer ausgebildeten Regenerativkammer kann eine entsprechende Strömungsbarriere ebenfalls oberhalb, innerhalb oder unterhalb der in der entsprechenden Regenerativkammer vorgesehenen Übergangslagen angeordnet sein.

Von Vorteil bei der Strömungsbarriere 48 ist damit, dass mit nur sehr wenigen Segmenten der Querschnitt D der Regenerativkammer 2 bzw. 3 verkleinert werden kann. Vorteilhaft bei der Strömungsbarriere 30 ist hingegen, dass mit dieser Strömungsbarriere 30 der verringerte Querschnitt D' der Regenerativkammer 2 bzw. 3 sehr genau eingestellt werden kann.

Obwohl die Ausführungsbeispiele der Erfindung oben detailliert beschrieben wurden, ist die Erfindung nicht auf diese Ausführungsbeispiele beschränkt. Ein Fachmann versteht, dass die Erfindung verschiedene Varianten mit umfasst, mit denen dasselbe Ergebnis erzielt wird wie mit den hier beschriebenen Ausführungsbeispielen. Es ist deshalb für den Fachmann klar, dass mit den hier beschriebenen Ausführungsbeispielen der Schutzumfang der Ansprüche nicht eingeschränkt wird und dass es weitere Varianten, Modifikationen und Alternativen gibt, die unter den Schutzumfang der Ansprüche fallen.

**Bezugszeichenliste:**

| | | | |
|---|---|---|---|
| 1 | Glasschmelzanlage | 27 | Lage der Gittersteine |
| 2 | Regenerativkammer | 28 | Übergangslagen |
| 3 | Regenerativkammer | 29 | Schlitzbogen |
| 4 | Brennerhals | 30 | Strömungsbarriere |
| 5 | Brennerhals | 31 | Segment |
| 6 | Gitterung | 32 | Pfeil |
| 7 | Gitterung | 33 | Pfeil |
| 8 | Gitterstein | 34 | Flamme |
| 9 | Gitterstein | 35 | Eindüsstelle |
| 10 | Wand | 36 | Pfeil |
| 11 | Trennwand | 37 | Abschnitt der Regenerativkammer 2 |
| 12 | Schmelzraum | 38 | Eindüsstelle |
| 13 | Öffnung | 39 | Pfeil |
| 14 | Öffnung | 40 | Übergangslagen |
| 15 | Pfeil | 41 | Schlitzbogen |
| 16 | Pfeil | 42 | Pfeil |
| 17 | Durchlass | 43 | Pfeil |
| 18 | Verteiler | 44 | Abschnitt der Regenerativkammer 3 |
| 19 | Federanschluss | 45 | Lage |
| 20 | Einlegevorbau | 46 | Gitterstein |
| 21 | Anordnung | 47 | Gitterstein |
| 22 | Schmelze | 48 | Strömungsbarriere |
| 23 | Schmelzgut | 49 | Segment |
| 24 | Strömungspfeil | 50 | Wand |
| 25 | Übergangslagen | 51 | Dach |
| 26 | Austritt | 52 | Öffnung |
| 53 | Öffnung | | |
| 54 | Öffnung | | |
| 55 | Öffnung | | |

## Patentansprüche

1. Regenerativkammer (2, 3) für eine Glasschmelzanlage (1) mit einem definierten Querschnitt D, wobei die Regenerativkammer (2,3) mehrere Schlitzbögen (29; 29'; 29", 29"', 41; 41'; 41") aufweist, oberhalb denen Übergangslagen (28,40) angeordnet sind, wobei auf den Übergangslagen (28, 40) eine Gitterung (6, 7) angebracht ist, **dadurch gekennzeichnet, dass** oberhalb der Schlitzbögen (29; 29'; 29"; 29"', 41, 41', 41") eine bewegbare Strömungsbarriere (30, 30', 48) vorgesehen ist, die zur Veränderung des Querschnitts D der Regenerativkammer (2, 3) durch eine Öffnung in der Wand (10) der Regenerativkammer (2, 3) von außen in die Regenerativkammer (2, 3) hinein und aus dieser herausbewegt werden kann.

2. Regenerativkammer (2, 3) nach Anspruch 1, **dadurch gekennzeichnet, dass** die Strömungsbarriere (30, 30', 48) aus mehreren Segmenten (31; 31'; 31"; 31'"; 31""; 31"'", 49; 49'; 49") besteht.

3. Regenerativkammer (2, 3) nach Anspruch 2, **dadurch gekennzeichnet, dass** die Segmente (31; 31'; 31"; 31"'; 31""; 31"'", 49; 49'; 49") plattenförmig oder stegförmig ausgebildet sind.

4. Regenerativkammer (2, 3) nach Anspruch 2, **dadurch gekennzeichnet, dass** die Segmente (31; 31'; 31"; 31"'; 31""; 31"'", 49; 49'; 49") aus Metall, aus einer Metalllegierung oder aus einem keramischen Material bestehen.

5. Regenerativkammer (2,3) nach Anspruch 1, **dadurch gekennzeichnet, dass** die Regenerativkammer (2, 3) eine Wand (10) mit Öffnungen (52 bis 55) aufweist, durch welche die Strömungsbarriere (30, 30', 48) in die Regenerativkammer (2,3) eingebracht ist.

6. Regenerativkammer (2, 3) nach Anspruch 1, **dadurch gekennzeichnet, dass** die Strömungsbarriere (48) unterhalb der Übergangslagen (28) angeordnet ist.

7. Regenerativkammer (2, 3) nach Anspruch 1, **dadurch gekennzeichnet, dass** die Strömungsbarriere (30, 30') oberhalb der Übergangslagen (28, 40) angebracht ist, wodurch die Strömungsbarriere (30, 30') zwischen den Übergangslagen (28,40) und der Gitterung (6, 7) angeordnet ist.

8. Regenerativkammer (2, 3) nach Anspruch 6, **dadurch gekennzeichnet, dass** die Strömungsbarriere (48) auf den Schlitzbögen (29; 29'; 29"; 29"') zumindest teilweise aufliegt.

9. Regenerativkammer (2, 3) nach Anspruch 1, **dadurch gekennzeichnet, dass** die Strömungsbarriere (30, 30') innerhalb der Übergangslagen (28, 40) auf den Schlitzbögen (29; 29'; 29"; 29"') angeordnet ist.

10. Regenerativkammer (2,3) nach Anspruch 2, **dadurch gekennzeichnet, dass** die Segmente (31; 31'; 31"; 31"'; 31""; 31""',49; 49'; 49") Unterbrechungen aufweisen.

11. Regenerativkammer (2, 3) nach Anspruch 10, **dadurch gekennzeichnet, dass** die Segmente (31; 31'; 31"; 31"'; 31""; 31""',49; 49', 49") aus mehreren miteinander verbundenen Einzelsegmenten bestehen.

12. Regenerativkammer (2, 3) nach Anspruch 11, **dadurch gekennzeichnet, dass** die Einzelsegmente Unterbrechungen aufweisen.

13. Regenerativkammer (2,3) nach Anspruch 11, **dadurch gekennzeichnet, dass** die Einzelsegmente aus Metall, aus einer Metalllegierung oder aus einem keramischen Material bestehen.

14. Regenerativkammer (2, 3) nach Anspruch 10 oder 12, **dadurch gekennzeichnet, dass** die Unterbrechungen Löcher und/oder Schlitze sind.

## Claims

1. A regenerative chamber (2, 3) for a glass melt installation (1) having a defined cross-section D, wherein the regenerative chamber (2, 3) has a plurality of slotted arches (29; 29'; 29", 29"', 41; 41', 41"), above of which transfer layers (28, 40) are arranged, wherein a grating (6, 7) is attached on the transfer layers (28, 40), **characterized in that** above the slotted arches (29; 29'; 29", 29"', 41; 41', 41") there is provided a movable flow barrier (30, 30', 48) which, for changing the cross-section D of the regenerative chamber (2, 3), can be inserted from the outside through an opening in the wall (10) of the regenerative chamber (2, 3) into the regenerative chamber (2, 3) and can be moved out of the same.

2. The regenerative chamber (2, 3) according to claim 1, **characterized in that** the flow barrier (30, 30', 48) is comprised of a plurality of segments (31; 31'; 31"; 31"'; 31""; 31""'; 49; 49'; 49").

3. The regenerative chamber (2, 3) according to claim 2, **characterized in that** the segments (31; 31'; 31"; 31"'; 31""; 31""'; 49; 49'; 49") are configured to be plate-shaped or bar-shaped.

4. The regenerative chamber (2, 3) according to claim 2, **characterized in that** the segments (31; 31'; 31"; 31"'; 31""; 31""'; 49; 49'; 49") are made from metal, a metal alloy or from a ceramic material.

5. The regenerative chamber (2, 3) according to claim 1, **characterized in that** the regenerative chamber (2, 3) has a wall (10) with openings (52 to 55) through which the flow barrier (30, 30', 48) is inserted into the regenerative chamber (2, 3).

6. The regenerative chamber (2, 3) according to claim 1, **characterized in that** the flow barrier (48) is arranged below the transfer layers (28).

7. The regenerative chamber (2, 3) according to claim 1, **characterized in that** the flow barrier (30, 30') is arranged above the transfer layers (28, 40), whereby the flow barrier (30, 30') is arranged between the transfer layers (28, 40) and the grating (6, 7).

8. The regenerative chamber (2, 3) according to claim 6, **characterized in that** the flow barrier (48) rests at least partially on the slotted arches (29; 29'; 29"; 29"').

9. The regenerative chamber (2, 3) according to claim 1, **characterized in that** the flow barrier (30, 30') is arranged within the transfer layers (28, 40) on the slotted arches (29; 29'; 29"; 29"').

10. The regenerative chamber (2, 3) according to claim 2, **characterized in that** the segments (31; 31'; 31"; 31"'; 31""; 31""'; 49; 49'; 49") include interruptions.

11. The regenerative chamber (2, 3) according to claim 10, **characterized in that** the segments (31; 31'; 31"; 31"'; 31""; 31""'; 49; 49'; 49") are comprised of a plurality of individual segments which are connected to one another.

12. The regenerative chamber (2, 3) according to claim 11, **characterized in that** the individual segments have interruptions.

13. The regenerative chamber (2, 3) according to claim 11, **characterized in that** the individual segments are made from metal, a metal alloy or from a ceramic material.

14. The regenerative chamber (2, 3) according to claim 10 or 12, **characterized in that** the interruptions are holes and/or slots.

## Revendications

1. Chambre de régénérateur (2, 3) pour installation de vitrification (1), ayant une section transversale définie D, la chambre de régénérateur (2,3) présentant plusieurs arches fendues (29; 29'; 29", 29"', 41; 41'; 41") au-dessus desquelles des couches de transition (28,40) sont disposées, dans laquelle est installé sur les couches de transition (28, 40) un système de grille (6, 7), **caractérisée en ce que**, au-dessus des arches fendues (29; 29'; 29"; 29'", 41, 41', 41"), est disposée une barrière d'écoulement (30, 30', 48) qui, pour modifier la section transversale D de la chambre de régénérateur (2, 3), peut être rentrée de l'extérieur dans la chambre de régénérateur (2, 3) et sortie de celle-ci par une ouverture pratiquée dans la paroi (10) de la chambre de régénérateur (2, 3).

2. Chambre de régénérateur (2, 3) selon la revendication 1, **caractérisée en ce que** la barrière d'écoulement (30, 30', 48) est composée de plusieurs segments (31; 31'; 31"; 31"'; 31""; 31""', 49; 49' ; 49").

3. Chambre de régénérateur (2, 3) selon la revendication 2, **caractérisée en ce que** les segments (31; 31'; 31"; 31'"; 31""; 31"'", 49; 49' ; 49") sont réalisés en forme de plaques ou en forme de traverses.

4. Chambre de régénérateur (2, 3) selon la revendication 2, **caractérisée en ce que** les segments (31; 31'; 31"; 31'"; 31""; 31""', 49; 49'; 49") sont composés de métal, d'un alliage métallique ou d'un matériau céramique.

5. Chambre de régénérateur (2, 3) selon la revendication 1, **caractérisée en ce que** la chambre de régénérateur (2, 3) présente une paroi (10) pourvue d'ouvertures (52 bis 55) à travers lesquelles la barrière d'écoulement (30, 30', 48) est introduite dans la chambre de régénérateur (2,3).

6. Chambre de régénérateur (2, 3) selon la revendication 1, **caractérisée en ce que** la barrière d'écoulement (48) est disposée en dessous des couches de transition (28).

7. Chambre de régénérateur (2, 3) selon la revendication 1, **caractérisée en ce que** la barrière d'écoulement (30, 30') est installée au-dessus des couches de transition (28, 40), ce qui a pour effet que la barrière d'écoulement (30, 30') est disposée entre les couches de transition (28, 40) et le système de grille (6, 7).

8. Chambre de régénérateur (2, 3) selon la revendication 6, **caractérisée en ce que** la barrière d'écoulement (48) repose au moins partiellement sur les arches fendues (29; 29'; 29"; 29"').

9. Chambre de régénérateur (2, 3) selon la revendication 1, **caractérisée en ce que** la barrière d'écoulement (30, 30') est disposée dans les couches de transition (28, 40) sur les arches fendues (29; 29'; 29"; 29'").

10. Chambre de régénérateur (2, 3) selon la revendication 2, **caractérisée en ce que** les segments (31; 31'; 31"; 31"'; 31""; 31"'", 49; 49'; 49") présentent des interruptions.

11. Chambre de régénérateur (2, 3) selon la revendication 10, **caractérisée en ce que** les segments (31; 31'; 31"; 31"'; 31""; 31""', 49; 49'; 49") sont composés de plusieurs segments individuels reliés entre eux.

12. Chambre de régénérateur (2, 3) selon la revendication 11, **caractérisée en ce que** les segments individuels présentent des interruptions.

13. Chambre de régénérateur (2, 3) selon la revendication 11, **caractérisée en ce que** les segments individuels sont composés de métal, d'un alliage métallique ou d'un matériau céramique.

14. Chambre de régénérateur (2, 3) selon la revendication 10 ou 12, **caractérisée en ce que** les interruptions sont des trous et/ou des fentes.
